# EUROPÄISCHE PATENTANMELDUNG

(11) **EP 2 372 215 A2**
(43) Veröffentlichungstag der Anmeldung: **05.10.2011**
(21) Anmeldenummer: 11156196.5
(22) Anmeldetag: 28.02.2011
(51) Int. Cl.: F16L 37/098, F16L 37/12

(54) **Verbindung und Verfahren zum Verbinden eines Wellrohrs mit einem Anschlussrohrteil, insbesondere eines Solarkollektors**

(30) Priorität: 23.03.2010 DE 102010012531
(71) Anmelder: Witzenmann GmbH, 75175 Pforzheim (DE)
(72) Erfinder: Klein, Tobias, 76137, Karlsruhe (DE); Gehring, Matthias, 75334, Straubenhardt (DE); Gerke, Edwin, 75449, Wurmberg (DE); Krebs, Norbert, 75203, Königsbach-Stein (DE)
(74) Vertreter: Lemcke, Brommer & Partner

(57) **Zusammenfassung**

Vorgeschlagen wird Verbindung zwischen einem Wellrohr (1) und einem Anschlussrohrteil (2), insbesondere für Solarkollektoren, wobei das Anschlussrohrteil in einem Abstand (A1) von seinen freien Ende (2a) eine sich radikal erstreckende erste Anschlagstruktur (2b), vorzugsweise einen umlaufenden Bund, mit einer ersten Dicke (D1) aufweist, und wobei das Wellrohr eine sich radial erstreckende zweite Anschlagstruktur (1b), vorzugsweise einen endständigen Bord, mit einer zweiten Dicke (D2) aufweist. Die Verbindung umfasst ein Verbindungsteil (3), welches zumindest eine erste und eine zweite Haltestruktur (3a, 3b) aufweist, welche in axialer Richtung um ein Maß voneinander beabstandet sind, welches Maß (M) im Wesentlichen der Summe aus der ersten Dicke und der zweiten Dicke entspricht, wobei das Verbindungsteil (3) mit der ersten Haltestruktur (3a) verliersicher an dem Wellrohr (1) angeordnet oder anordenbar ist, so dass das Verbindungsteil (3) mit seiner zweiten Haltestruktur (3b) gegenüber der Anschlagstruktur (1 b) des Wellrohrs hervorsteht. Zumindest die zweite Haltestruktur (3b) an wenigstens ihrem von der Anschlagstruktur (1b) des Wellrohrs (1) abgewandten Ende ist derart ausgebildet, dass das Anschlussrohrteil (2) durch sie hindurch axial mit dem Wellrohr (1) zusammenführbar ist, wodurch die erste Anschlagstruktur (1 b) und die zweite Anschlagstruktur (2b) gemeinsam zwischen der ersten Haltestruktur (3a) und der zweiten Haltestruktur (3b) aneinander festgelegt sind.

## Beschreibung

Die Erfindung betrifft eine Verbindung nach dem Oberbegriff des Patentanspruchs 1 zwischen einem Wellrohr und einem Anschlussrohrteil, insbesondere für Solarkollektoren, wobei das Anschlussrohrteil in einem Abstand von seinem freien Ende eine sich radial erstreckende erste Anschlagstruktur, vorzugsweise einen umlaufenden Bund, mit einer ersten Dicke aufweist, und wobei das Wellrohr eine sich radial erstreckende zweite Anschlagstruktur, vorzugsweise einen endständigen Bord, mit einer zweiten Dicke aufweist.

Außerdem betrifft die Erfindung ein Verfahren nach dem Oberbegriff des Patentanspruchs 14 zum Verbinden eines Wellrohrs mit einem Anschlussrohrteil, insbesondere dem Anschlussrohrteil eines Solarkollektors, wobei das Anschlussrohrteil und das Wellrohr in jeweils gleicher Weise ausgebildet sind, wie weiter oben beschrieben.

Eine gattungsgemäße Verbindung ist aus der DE 20 2007 009 182 U1 bzw. der EP 2 009 367 A1 bekannt.

Bei den genannten Solarkollektoren handelt es sich regelmäßig um so genannte OEM-Geräte, die auf der Baustelle oft unter schwierigen Bedingungen (auf dem Dach) ohne bauliche Veranderungen montiert und miteinander verbunden werden müssen. Regelmäßig ist dabei zudem der Verbindungsbereich unter seitlichen Überständen der Solarkollektoren angeordnet und somit für den Monteur nur schwer zugänglich. Hinzu kommt, dass es sich bei den genannten Solarkollektoren um relativ schwere Bauteile handelt, die regelmäßig zwischen 30 und 40 kg pro Stück wiegen und deshalb insbesondere unter den angesprochenen schwierigen Rahmenbedingungen nur bedingt handhabbar sind.

Es besteht somit Bedarf an einer ohne größeren Aufwand herzustellenden, sicheren Verbindung zwischen derartigen Bauteilen, die ein Monteur auch unter schwierigen Arbeitsbedingungen ohne Weiteres, das heißt insbesondere ohne spezielles Werkzeug oder sogar ganz ohne Werkzeug schaffen kann. Dabei ist insbesondere zu vermeiden, dass zum Schaffen der genannten Verbindung vorgesehene Verbindungsteile erst vor Ort an den zu verbindenden Elementen angebracht werden müssen, um eine komplizierte Handhabung bzw. sogar einen Verlust derselben zu vermeiden, Insbesondere Kollektorverbinder mit Verschraubungen, Anschlussgewinden, Klammern oder dergleichen sind in diesem Zusammenhang als nachteilig anzusehen.

Die zu schaffende Verbindung muss darüber hinaus sehr hohen Temperaturen Stand halten und entsprechend robust ausgebildet sein.

Der Erfindung liegt die Aufgabe zugrunde, eine Verbindung der eingangs genannten Art so weiterzuentwickeln, dass sie die Nachteile vorbekannter Lösungen vermeidet und den vorstehend aufgeführten Anforderungen gerecht wird.

Die Aufgabe wird erfindungsgemäß gelöst durch eine Verbindung mit den Merkmalen des beigefügten Patentanspruchs 1 sowie unabhängig davon durch ein Verfahren mit den Merkmalen des Patentanspruchs 14. Vorteilhafte Weiterbildungen der erfindungsgemäßen Lösungen sind jeweils Gegenstand von Unteransprüchen, deren Wortlaut hiermit durch ausdrückliche Bezugnahme in die Beschreibung aufgenommen wird, um unnötige Textwiederholungen zu vermeiden.

Die vorliegende Erfindung schafft demgemäß eine Verbindung zwischen einem Wellrohr und einem Anschlussrohrteil, insbesondere für Solarkollektoren, wobei das Anschlussrohrteil in seinem Abstand von seinen freien Ende eine sich radial erstreckende erste Anschlagstruktur, vorzugsweise einen umlaufenden Bund, mit einer ersten Dicke aufweist, und wobei das Wellrohr eine sich radial erstreckende zweite Anschlagstruktur, vorzugsweise einen endständigen Bord, mit einer zweiten Dicke aufweist, mit einem Verbindungsteil, welches zumindest eine erste Haltestruktur und eine zweite Haltestruktur aufweist, welche in axialer Richtung um ein Maß voneinander beabstandet sind, welche Maß im Wesentlichen der Summe aus der ersten Dicke und der zweiten Dicke entspricht, wobei das Verbindungsteil mit der ersten Haltestruktur verliersicher an dem Wellrohr angeordnet oder anordenbar ist, so dass das Verbindungsteil mit seiner zweiten Haltestruktur gegenüber der Anschlagstruktur des Wellrohrs hervorsteht, wobei zumindest die zweite Haltestruktur an wenigstens ihrem von der Anschlagstruktur des Wellrohre abgewandten Ende derart ausgebildet ist, dass das Anschlussrohrteil mit der ersten Anschlagstruktur durch sie hindurch axial mit dem Wellrohr zusammenführbar ist, wodurch die erste Anschlagstruktur und die zweite Anschlagstruktur gemeinsam zwischen der ersten Haltestruktur und der zweiten Haltestruktur aneinander festgelegt sind.

Außerdem schafft die Erfindung ein Verfahren zum Verbinden eines Wellrohrs mit einem Anschlussrohrteil, insbesondere dem Anschlussrohrteil eines Solarkollektors, welches Anschlussrohrteil in einem Abstand von seinen freien Ende eine sich radial erstreckende erste Anschlagstruktur, vorzugsweise einen umlaufenden Bund, mit einer ersten Dicke aufweist, und welches Wellrohr eine sich radial erstreckende zweite Anschlagstruktur, vorzugsweise einen endständigen Bord, mit einer zweiten Dicke aufweist, unter Verwendung eines Verbindungsteils, vorzugsweise eines erfindungsgemäßen Verbindungsteils, welches zumindest eine erste und eine zweite Haltestruktur aufweist, welche in axialer Richtung um ein Maß voneinander beabstandet sind, welches Maß im Wesentlichen der Summe aus der ersten Dicke und der zweiten Dicke entspricht, wobei das Verbindungsteil mit der ersten Haltestruktur verliersicher an dem Wellrohr angeordnet oder anordenbar ist, so dass das Verbindungsteil mit seiner zweiten Haltestruktur gegenüber der Anschlagstruktur des Wellrohrs hervorsteht, wobei das Anschlussrohrteil durch die zweite Haltestruktur hindurch axial mit dem Wellrohr zusammengeführt wird, bis die erste Anschlagstruktur und die zweite Anschlagstruktur gemeinsam zwischen der ersten Haltestruktur und der zweiten Haltestruktur in axialer Richtung insbesondere zugfest aneinander festgelegt sind.

Von besonderer Bedeutung ist in diesem Zusammenhang, dass erfindungsgemäß das Verbindungsteil mit der ersten Haltestruktur verliersicher an dem Wellrohr, insbesondere an dessen endständigem Bord, angeordnet oder anordenbar ist und auf diese Weise bereits vor dem Schaffen der eigentlichen Verbindung vormontiert sein kann. Des Weiteren ist vorgesehen, dass das Anschlussrohrteil mit seiner Anschlagstruktur, vorzugsweise einem radial umlaufenden Bund, durch die genannte zweite Haltestruktur axial hindurchführbar und mit dem Wellrohr bzw. dessen Bord zusammenführbar ist. In dieser Konfiguration sind dann die beiden Anschlagstrukturen, das heißt Wellrohr und Anschlussrohrteil gemeinsam zwischen der ersten Haltestruktur und der zweiten Haltestruktur aneinander festgelegt und sicher verbunden Eine aufwändige, nachträgliche Montage des Verbindungsteils auf der Baustelle, insbesondere unter Verwendung von (Spezial-)Werkzeug, ist somit nicht erforderlich,

Um das Verbindungsteil bereits vor dem eigentlichen Schaffen der Verbindung definiert und verliersicher an dem Wellrohr anordnen zu können, sieht eine erste Weiterbildung der erfindungsgemäßen Verbindung vor, dass das Verbindungsteils noch wenigstens eine dritte Haltestruktur aufweist, mit der es vorteilhafter Weise zwischen zwei Wellenberge des Wellrohrs eingreift, um das Verbindungsteils im Wesentlichen in Position zu halten.

Besonders vorteilhaft ist es, wenn das Verbindungsteil derart ausgebildet ist, dass es in der Umfangsrichtung geschlossen oder schließbar und vorzugsweise auch zerstörungsfrei wieder öffenbar ausgebildet ist, ohne dass in diesem Zusammenhang spezielles Werkzeug erforderlich wäre. Vorteilhafterweise soll im Rahmen entsprechender Weiterbildungen der Erfindung ein einfaches Standard-Werkzeug. wie ein Schraubenzieher oder dergleichen, ausreichen, um das Verbindungsteil zum Lösen der Verbindung wieder zerstörungsfrei öffnen zu können.

Eine erste, besonders praxisrelevante Realisierung der erfindungsgemäßen Verbindung sieht vor, dass das Verbindungsteil nach Art einer Schelle ausgebildet ist, welche an einer Stelle ihres Umfangs eine Trennstelle aufweist, wobei vorzugsweise an der Trennstelle beiderseits derselben komplementäre Raststrukturen angeordnet sind, mittels derer sich das Verbindungsteil zum Verbinden von Anschlussrohrteil und Wellrohr reversibel in Umfangsrichtung schließen lässt.

Eine erste Weiterbildung dieser Realisierung sieht vor, dass die Raststrukturen einerseits wenigstens eine erste Hakenstruktur und andererseits wenigstens einen entsprechend zum Aufnehmen der genannten Hakenstruktur dienenden Durchbruch umfassen. Eine andere Weiterbildung der genannten Realisierung sieht vor, dass die Raststrukturen einerseits wenigstens eine erste Hakenstruktur und andererseits wenigstens eine zweite Hakenstruktur umfassen, wobei die genannten Hakenstrukturen zum Verrasten mit ihren Hakenenden in- bzw, hintereinander greifen.

Im Zuge einer wieder anderen Ausgestaltung der erfindungsgemäßen Verbindung ist vorgesehen, dass die genannten Haltestrukturen, vorzugsweise die genannten ersten bis dritten Haltestrukturen, mittels Durchbrüchen eines Schellenkörpers des schellenartigen Verbindungsteils gebildet sind, insbesondere durch Flanken/Kanten der genannten Durchbrüche.

Eine zweite besonders praxisrelevante Realisierung der erfindungsgemäßen Verbindung sieht vor, dass das Verbindungsteil nach Art eines geschlossenen Ringteils ausgebildet ist. Auch dieses Ringteil kann vorzugsweise in Umfangsrichtung an einer Trennstelle reversibel trennbar sein. Auf diese Weise lässt sich in Weiterbildung der vorliegenden Erfindung eine Art "Plug-and-play"-Verbindung schaffen.

Hierzu kann vorgesehen sein, dass die erste Haltestruktur wenigstens eine aus dem Material des Ringteil-Körpers gebildete erste Zunge umfasst, vorzugsweise jedoch mehrere über den Umfang des Ringteils verteilte erste Zungen, welche radial nach innen in den Bereich zwischen zwei Wellenbergen des Wellrohrs eingreift bzw. eingreifen, wobei mit dem genannten Bereich vorzugsweise der Bereich hinter der Anschlagstruktur (Bord) des Wellrohre und einem darauf folgenden Wellenberg gemeint ist. Dabei kann sich die genannte erste Zunge in besonders vorteilhafter Weise mit ihrem freien Ende in Richtung der Anschlagstruktur (Bord) des Wellrohrs erstrecken.

Weiterhin kann in diesem Zusammenhang vorgesehen sein, dass die zweite Haltestruktur eine aus dem Material des Ringteil-Körpers gebildete zweite Zunge umfasst vorzugsweise jedoch mehrere über den Umfang des Ringteil-Körpers verteilt angeordnete zweite Zungen, welche radial nach innen in den Bereich hinter der Anschlagstruktur des Wellrohrs eingreift bzw. eingreifen, wobei sich die zweite Zunge mit ihrem freien Ende vorzugsweise in Richtung der Anschlagstruktur des Wellrohrs und höchst vorzugsweise in Richtung des freien Endes der ersten Zunge, das heißt auf letztere zu erstreckt. Dabei entspricht der lichte axiale Abstand der zwischen dem freien Ende der ersten Zunge und dem freien Ende der zweiten Zunge im Wesentlichen der Summe aus der ersten Dicke und der zweiten Dicke, um das Wellrohr und das Anschlussrohrteil mit ihren jeweiligen Anschlussstrukturen sicher zwischen der ersten Zunge und der zweiten Zunge verbunden zu halten.

In diesem Zusammenhang kann weiter vorgesehen sein, dass die dritte Haltestruktur wenigstens eine aus dem Material des Ringteil-Körpers gebildete dritte Zunge umfasst, vorzugsweise jedoch wiederum mehrere über den Umfang des Ringteils verteilte dritte Zungen, welche radial nach innen in den Bereich zwischen zwei Wellenbergen des Wellrohrs eingreift bzw. eingreifen. Dabei erstreckt sich die dritte Zunge von dem Verbindungsende, das heißt dem dem Anschlussrohrteil zugewandten freien Ende des Wellrohrs weg.

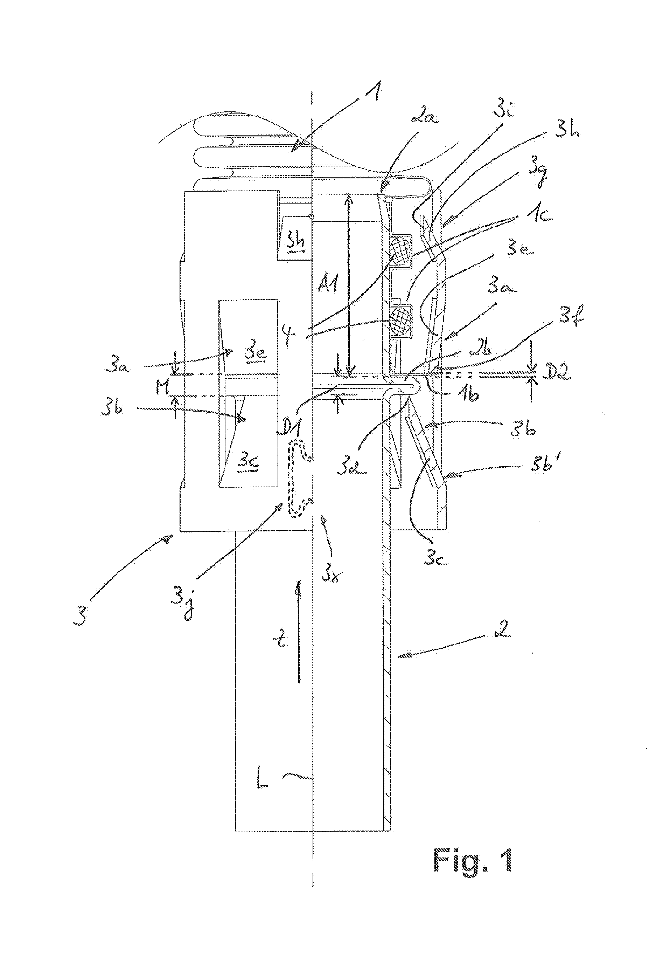

Die besonders vorteilhafte Funktionsweise der zuletzt geschilderten praxisrelevanten Ausgestallung der erfindungsgemaßen Verbindung wird weiter unten anhand von Figur 1 noch umfassend geschildert. Es ergibt sich auf diese Weise eine besonders einfach zu handhabende Realisierung der vorgeschlagenen Verbindung, zu deren Schaffung nur noch das Anschlussrohrteil in das ringförmige Verbindungsteils eingeführt und mit dem Wellrohr zusammengeführt werden muss, um ohne Weiteres eine dauerhafte und sichere Verbindung von Wellrohr und Anschlussrohrteil zu erhalten.

Eine dritte besonders praxisrelevante Realisierung der erfindungsgemaßen Verbindung zeichnet sich dadurch aus, dass das Verbindungsteil nach Art eines vorzugsweise geschlossenen Halteteils ausgebildet ist, welches die folgenden Besonderheiten aufweist: Das Verbindungsteil/Halteteil umfasst wenigstens einen ersten Bereich, der vorzugsweise etwa kreisrund ausgebildet ist und der einen relativ zu einem Außendurchmesser der ersten Anschlagstruktur und/oder der zweiten Anschlagstruktur größeren ersten Innendurchmesser oder eine entsprechend größere erste lichte Weite aufweist. Weiterhin besitzt das Verbindungsteil/Halteteil wenigstens einen zweiten, vorzugsweise ebenfalls im Wesentlichen kreisrunden Bereich, der relativ zu dem Außendurchmesser der ersten Anschlagstruktur und/oder der zweiten Anschlagstruktur einen kleineren oder gleich großen zweiten Innendurchmesser bzw. einer entsprechend dimensionierte zweite lichte Weite aufweist. Außerdem besitzt das genannte Verbindungsteil/Halteteil noch wenigstens einen dritten Bereich mit gegenüber dem ersten Bereich und dem zweiten Bereich kleinerem dritten Innendurchmesser bzw. einen entsprechend kleineren dritten lichten Weite, wobei der dritte Bereich zwischen dem ersten Bereich und dem zweiten Bereich angeordnet ist. Der erste Bereich dient dazu, das Verbindungsteil/Halteteil verliersicher an dem Wellrohr zu halten, Der zweite Bereich ist derart dimensioniert, dass er das Wellrohr einerseits und das Anschlussrohrteil andererseits mit ihren jeweiligen Anschlagstrukturen zum Schaffen einer dauerhaften Verbindung sicher zusammenhält. Der dritte Bereich ist ein Zwischen- oder Übergangsbereich, mit dem sich das beschriebene Verbindungsteil/Halteteil relativ zu der Anordnung aus Wellrohr und Anschlussrohrteil quer zu deren axialer Richtung verschieben lässt, um die beschriebene Verbindung zu schaffen bzw. wieder zu lösen.

Entsprechend kann in Weiterbildung des erfindungsgemäßen Verfahrens vorgesehen sein, dass zum Festlegen von erster Anschlagstruktur (Bund) und zweite Anschlagstruktur (Bord) eine Verschiebung des Verbindungsteils quer zur axialen Richtung der Anordnung erfolgt, wodurch die Anordnung wie bereits beschrieben - von dem ersten Bereich uber den dritten Bereich in den zweiten Bereich "wechselt".

Ein besonderer Vorteil, insbesondere Kostenvorteil, ergibt sich im Rahmen der vorliegenden Erfindung dadurch, dass im Zuge einer anderen Weiterbildung vorgesehen sein kann, dass das Anschlussrohrteil ein Kupferrohr ist, vorzugsweise mit gegenüber dem Wellrohr relativ großer Toleranz. Im Rahmen der vorliegenden Erfindung ist es nämlich möglich, das Wellrohr mit hinreichend kleiner Toleranz auszubilden, so dass die geschaffene Verbindung den vorgeschriebenen Dichtigkeitsanforderungen gerecht wird.

In diesem Zusammenhang kann weiterhin vorgesehen sein, dass das Wellrohr endständig in wenigstens einer, vorzugsweise in wenigstens zwei nach innen offenen Wellen jeweils einen O-Ring als Dichtung aufweist. Die somit erreichbare statische O-Ring-Pressung gewährleistet das Erreichen der vorstehend angesprochenen Dichtigkeit.

Insbesondere durch die Verwendung eines Anschlussrohrteils, welches als Kupferrohr mit relativ großer Toleranz ausgeführt ist, erreicht die vorliegende Erfindung wertvolle Kostenvorteile gegenüber vorbekannten Lösungen, bei denen kollektorseitig ein angelötetes Drehteil geringer Toleranz erforderlich ist, um die vorgeschriebenen Dichtigkeitsanforderungen zu erfüllen,

Die weiter oben beschriebenen O-Ring-Dichtungen sind aufgrund ihrer speziellen Anordnung am Montageort bereits richtig und verliersicher angeordnet, was das Schaffen einer entsprechenden Verbindung in besonderer Weise erleichtert.

Weitere Eigenschaften und Vorteile der vorliegenden Erfindung ergeben sich aus der nachfolgenden Beschreibung von Ausführungsbeispielen anhand der Zeichnung.
- Figur 1: zeigt eine erste Ausgestaltung der erfindungsgemäßen Verbindung zwischen einem Wellrohr und einem Anschlussrohrteil, insbesondere für Solarkollektoren;
- Figuren 2a, 2b: zeigen eine zweite Ausgestaltung der erfindungsgemäßen Verbindung zwischen einem Wellrohr und einem Anschlussrohrteil, insbesondere für Solarkollektoren; und
- Figuren 3a, 3b: zeigen eine dritte Ausgestaltung der erfindungsgemäßen Verbindung zwischen einem Wellrohr und einem Anschlussrohrteil, insbesondere für Solarkollektoren.

Figur 1 zeigt, teilweise im Längsschnitt, eine erste Ausgestaltung der erfindungsgemäßen Verbindung zwischen einem Wellrohr 1 und einem Anschlussrohrteil 2, wobei es sich bei dem Anschlussrohrteil 2 insbesondere um das Anschlussrohrteil eines weiter nicht gezeigten Solarkollektors handeln kann. Bei dem Anschlussrohrteil 2 handelt es sich vorzugsweise um ein Kupfer-Rohrteil mit relativ zu dem Wellrohr 1 großer Abmessungstoleranz, Das Anschlussrohrteil 2 weist in einem Abstand A1 von seinem freien Ende 2a eine sich radial erstreckende erste Anschlagstruktur in Form eines umlaufenden Bundes 2b auf, welche - gemessen in axialer Richtung - eine Dicke D1 besitzt. Das Wellrohr 1 weist eine sich radial erstreckende zweite Anschlagstruktur in Form eines endständigen Bords 1b auf, welche eine zweite Dicke D2 besitzt.

Die genannte Verbindung umfasst weiterhin ein Verbindungsteil 3, welches zumindest eine erste Haltestruktur 3a und eine zweite Haltestruktur 3b aufweist, welche in axialer Richtung der Anordnung um ein Maß M voneinander beabstandet sind. Dabei entspricht das Maß M im Wesentlichen der Summe D1 + D2 aus der ersten Dicke D1 und der zweiten Dicke D2. Das Verbindungsteil 3 ist mit seiner ersten Haltestruktur 3a verliersicher, an dem Wellrohr 1 angeordnet, indem die erste Haltestruktur 3a, wie gezeigt, radial nach innen in den Bereich über dem Bord 1b eingreift, Dabei steht das Verbindungsteil 3 mit seiner zweiten Haltestruktur 3b in axialer Richtung gegenüber dem Bord 1 b hervor, und zwar im Wesentlichen gerade um ein Maß D1, welches der Dicke des Bundes 2b entspricht Die zweite Haltestruktur 3b ist an ihrem von dem Bord 1b abgewandten Ende 3b' derart ausgebildet, dass das Anschlussrohrteil 2 mit seinem Bund 2b durch sie hindurch axial in Richtung des Pfeils Z mit dem Wellrohr 1 zusammenführbar ist. Zu diesem Zweck ist das Verbindungsteil 3 im Bereich des genannten Endes 3b' der zweiten Haltestruktur mit einem relativ zu dem Außendurchmesser des Anschlussrohrsteils 2 im Bereich des Bundes 2b vergrößerten Innendurchmesser ausgebildet, so dass das Anschlussrohrteil 2 in Richtung des Pfeils Z in das Verbindungsteil 3 hineinschiebbar ist. Insbesondere die zweite Haltestruktur 3b des Verbiridungsteil 3 ist in Form einer Anzahl von über den Umfang des Verbindungsteils 3 angeordneten, aus dem Material des Verbindungsteils 3 gebildeten Zungen 3c realisiert, welche radial nach innen umgebogen sind, so dass sich Einlaufschrägen für das Anschlussrohrteil 2 bzw. dessen Bund 2b beim Einführen in Richtung Z in das Verbindungsteil 3 ergeben. Der lichte Innendurchmesser des Verbindungsteils 3 im Bereich der Enden 3d der Zungen 3c ist dabei kleiner als der bereits erwahnte Außendurchmesser des Anschlussrohrteils 2 im Bereich des Bundes 2b.

Auch die erste Haltestruktur 3a des Verbindungsteils 3 ist vorliegend durch eine Anzahl von über den Umfang des Verbindungsteils 3 verteilt angeordneten Zungen 3e gebildet, welche ebenfalls radial nach innen umgebogen sind, so dass sie mit ihren freien Enden 3f an dem Wellrohrbord 1b anliegen, wie in Figur 1 gezeigt.

Das Wellrohr 1 weist benachbart dem Bord 1b noch zwei besonders ausgestaltete, nach innen öffnende Wellenberge 1c auf, in welche jeweils ein Dicht-O-Ring 4 eingelegt ist,

An seinem von der zweiten Haltestruktur 3b abgewandten Ende weist das Verbindungsteil 3 noch eine dritte Haltestruktur 3g auf, welche ebenfalls durch eine Anzahl von über den Umfang des Verbindungsteils 3 angeordneten Zungen 3h besteht, welche mit ihren freien Enden 3i ebenso wie die Zungen 3c, 3e radial nach innen in Richtung der Längsachse L der Anordnung umgebogen sind. Dabei greifen die Zungen 3h mit ihren freien Enden 3i in einen Bereich zwischen Wellenbergen des Wellrohrs 1 ein, um das Verbindungsteil 3 verliersicher an dem Wellrohr 1 zu halten.

Die Zungen 3h können in Umfangsrichtung gegenüber den Zungen 3c und 3e versetzt angeordnet sein, wie sich ebenfalls aus der Darstellung in Figur 1 ohne Weiteres ergibt, Diese Art der Anordnung hängt jedoch von der jeweiligen Zungenanzahl ab und ist für die beabsichtigte Funktion nicht weiter von Bedeutung

Insbesondere zwecks Anbringung an dem Wellrohr 1 kann das Verbindungsteil 3 in Umfangsrichtung getrennt ausgeführt sein, wobei die Trennstelle/Trennlinie 3x vorzugsweise im Wesentlichen parallel zu der in Figur 1 gezeigten Längsachse L verläuft. Vorteilhafterweise sind die beiden Ränder des Verbindungsteils an der Trennstelle zumindest abschnittsweise komplementär-schwalbenschwanzartig oder ähnlich ausgebildet, um das Verbindungsteil 3 nach Anbringen auf dem Wellrohr in Umfangsrichtung reversibel verschließen zu können. Auf diese Weise ist es auch möglich, dass das Verbindungsteil 3 zu einem späteren Zeitpunkt wieder von dein Wellrohr 1 bzw. dem Anschlussrohrteil 2 zu entfernen und die geschaffene Verbindung zu lösen. Entsprechende Strukturen sind in Figur 1 bei Bezugszeichen 3j exemplarisch gestrichelt dargestellt

Das Verbindungsteil 3 wird im geöffneten Zustand auf das Anschlussende des Wellrohrs 1 aufgeschoben und dort mittels der Haltestrukturen 3a, 3h über die radial nach innen umgebogenen Zungen 3e bzw. 3h fixiert, wie in Figur 1 gezeigt. Auf diese Weise ist das Verbindungsteil 3 verliersicher auf dem Wellrohr gehalten. Die Zungen 3h stellen sicher, dass das Verbindungsteil 3 nicht vom Verbindungsende des Wellrohrs 1 wegrutschen kann. Die Zungen 3e stellen sicher, dass das Verbindungsteil 3 nicht vom Verbindungsende des Wellrohrs 1 abfallen kann. Anschließend wird zum Schaffen der erfindungsgemäßen Verbindung das Anschlussrohrteil 2 in Richtung des Pfeils Z in das Anschlussende des Wellrohrs 1 eingeschoben, Dabei weitet sich das Verbindungsteil 3 im Bereich der Zungen 3c beim Hindurchtreten des Bundes 2b, bis der Bund 2b mit dem Wellrohrbord 1 b in Anlage tritt. Aufgrund der angesprochenen Dimensionierung des Verbindungsteils 3 mit M = D1 + D2 schnappen anschließend die Zungen 3c radial nach innen in den Bereich hinter dem Bund 2b zurück, so dass das Anschlussrohrteil 2 nicht mehr entgegen der Richtung Z wieder aus dem Wellrohr 1 herausziehbar ist. Auf diese Weise sind das Weilrohr 1 und das Anschlussrohrteil 2 im Verbindungsbereich sicher zusammengehalten, wobei die O-Ringe 4 das Wellrohr 1 gegenüber dem Anschlussrohrteil 2 abdichten.

Bei der Ausgestaltung gemäß Figur 1 handelt es sich daher um eine besonders einfach handhabbare "Plug-and-play"-artige Verbindung.

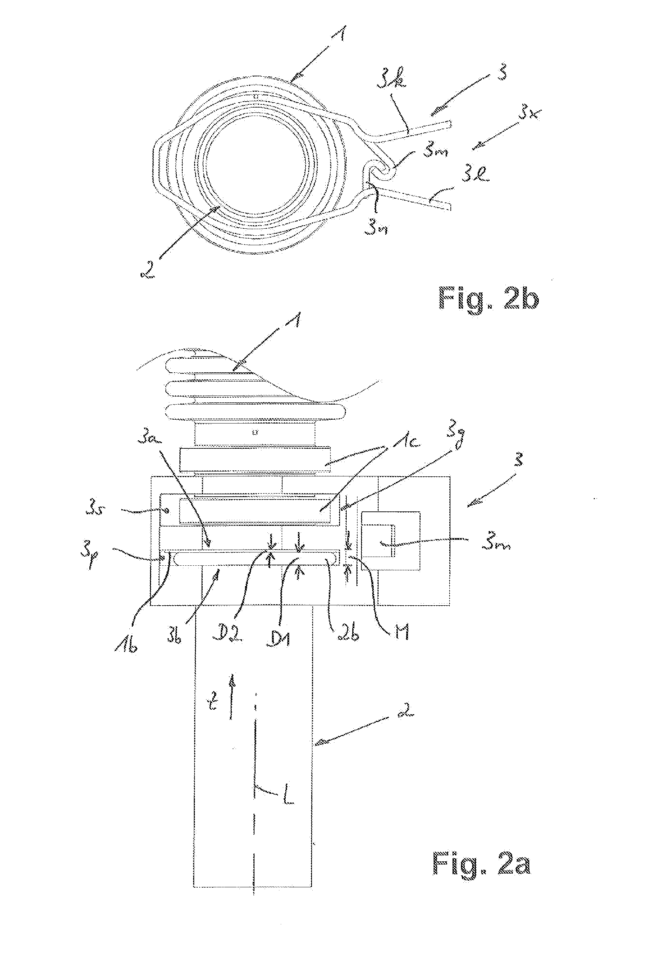

In den Figuren 2a und 2b ist eine weitere Ausgestaltung der erfindungsgemäßen Verbindung zwischen einem Wellrohr 1 und einem Anschlussrohrteil 2 dargestellt, wobei Figur 2a eine Seitenansicht und Figur 2b eine Ansicht mit Blickrichtung entlang der Längsachse L der Anordnung mit Blick auf das freie Ende des Anschlussrohrteils 2 zeigt. Das Wellrohr 1 und das Anschlussrohrteil 2 sind entsprechend der Ausgestaltung in Figur 1 ausgebildet, so dass hierauf vorliegend nicht weiter einzugehen ist. Gleiche Bezugszeichen bezeichnen in allen Figuren gleiche oder gleichwirkende Elemente.

Das Verbindungsteil 3 ist nach Art einer Schelle ausgebildet und weist an seinen freien Schenkein 3k, 31 komplementäre Hakenstrukturen 3m bzw. 3n auf, mit denen sich das Verbindungsteil in Umfangsrichtung reversibel schließen lässt. Alternativ zu der in den Figuren 2a, 2b gezeigten Ausgestaltung kann auch eine Ausgestaltung realisiert werden, bei der nur eine Hakenstruktur (beispielsweise die Hakenstruktur 3m) vorhanden ist und bei der die komplementäre (Rast-)Struktur durch einen geeigneten Durchbruch in dem betreffenden Schenkel (beispielsweise dem Schenkel 3I) gebildet ist. Das Verbindungsteil 3 weist seitlich in dem Schellenkörper angeordnete Durchbrüche 3p, 3s auf, welche mit ihren Rändern/Flanken die genannten ersten bis dritten Haltestrukturen bilden. Insbesondere ist die Breite des Durchbruchs 3p in axialer Richtung so bemessen, dass sie gerade der Summe aus der Dicke des Wellrohrbords 1b und der Dicke des Bundes 2b entspricht (vgl. Figur 1 bzw. die in Figur 2a eingezeichneten identischen Bezugszeichen D¹, D2 und M = D1 + D2). Der Durchbruch 3s nimmt den ersten in axialer Richtung auf den Bord 1b folgenden Wellenberg 1c des Wellrohrs 1 auf und sorgt so mit seinen Rändern/Flanken dafür, dass das Verbindungsteil 3 nicht in axialer Richtung auf dem Wellrohr verrutschen kann und verliersicher darauf gehalten ist.

Aufgrund der Tatsache, dass der Bord 1b des Wellrohrs 1 bei allen Ausgestaltungen in radialer Richtung größer bemessen ist als der Bund 2b des Anschlussrohrteils 2. lässt sich das Anschlussrohrteil 2 mit seinem Bund 2b in axialer Richtung in Richtung des Pfeils Z in das Verbindungsteil 3 einführen, während dieses zumindest im Bereich des Durchbruchs 3p verliersicher auf dem Wellrohr 1 an dessen Bord 1b gehalten ist. Sobald Bund 1 b und Bord 2b gemäß der Darstellung in Figur 2a miteinander in Ablage treten, wird das Verbindungsteil 3 durch Zusammendrücken der freien Schenkel 3k, 3I geschlossen, bis die komplementären Strukturen 3m, 3n einrasten, um die Verbindung dauerhaft zu sichern.

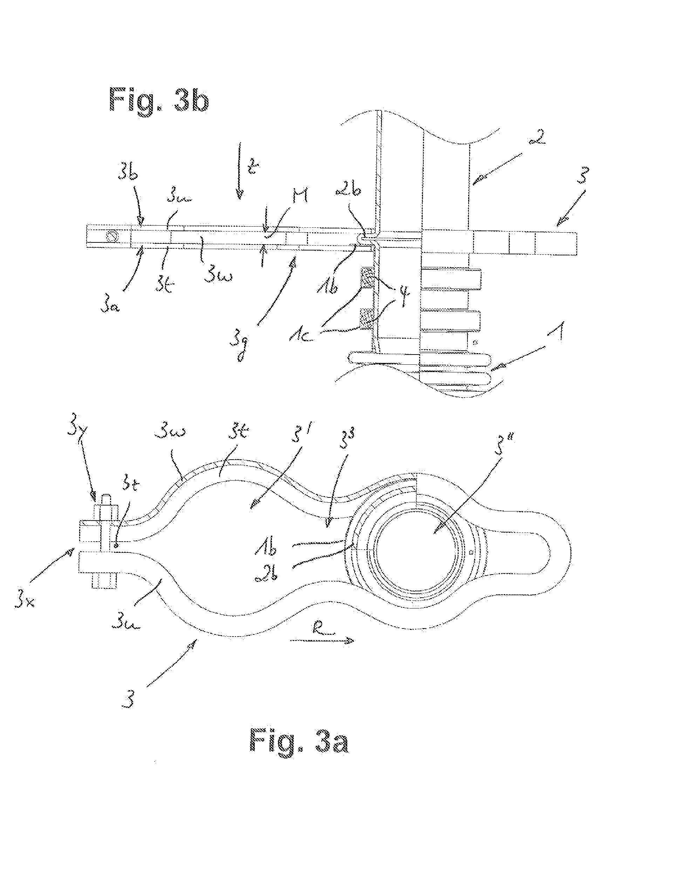

Die Figuren 3a und 3b zeigen noch eine weitere Ausgestaltung der erfindungsgemäßen Verbindung, bei der das Verbindungsteils 3 nach Art eines geschlossenen bzw. schließbaren Halteteils ausgebildet ist, wobei wiederum nur auf die wesentlichen Unterschiede zu den bereits erläuterten Ausgestaltungen näher eingegangen wird.

Das Verbindungsteil 3 ist aus einem mehrfach gebogenen Profilstrang gebildet, wobei das zugrunde liegende Profil im Querschnitt im Wesentlichen U-förmig ausgebildet ist und entsprechend zwei freie Schenkel 3t, 3u und einen dazwischenliegenden mittleren Schenkel 3w aufweist. Der lichte Abstand zwischen den beiden freien Schenkeln 3u, 3t entspricht dem bereits mehrfach angesprochenen Maß M, M = D1 + D2. Auf diese Weise kann das Verbindungsteil/Halteteil 3 mit dem genannten Profil den Bord 1b und den Bund 2b übergrelfen und in axialer Richtung fest zusammenhalten.

Zu diesem Zweck weist das Verbindungsteil/Halteteil 3 wenigstens einen ersten Bereich 3' auf, welcher bezogen auf den Außendurchmesser der ersten Anschlagstruktur (Bund) 2b einen vergrößerten Innendurchmesser aufweist. Außerdem besitzt das Verbindungsteil/Hatteteil 3 einen zweiten Bereich 3", dessen Inneridurchmesser kleiner ist als der Außendurchmesser der ersten Anschlagstruktur (Bund) 2b. Wenn in diesem Zusammenhang von "Innendurchmesser" die Rede ist, ist damit immer der lichte Innendurchmesser des in etwa kreisförmigen ersten Bereichs 3' bzw. des im Wesentlichen ebenfalls kreisförmigen zweiten Bereichs 3" gemeint. Der genannte lichte Innendurchmesser entspricht dabei dem lichten Innendurchmesser, welcher zwischen den genannten freien Schenkeln 3u, 3t des Profilstrangs in der Ebene des Verbindungsteils, d. h. in der Blattebene verbleibt (vgl. Figur 3a). In beiden Bereichen 3', 3" ist der lichte Innendurchmesser jedoch kleiner als der Außendurchmesser der zweiten Anschlag struktur (Bord) 1 b.

Zwischen den genannten ersten und zweiten Bereichen 3', 3" befindet sich noch ein dritter Bereich 3³ des Verbindungsteils/Halteteils 3, dessen Innendurchmesser bzw. lichte Weite kleiner ist als der Innendurchmesser des ersten Bereichs 3' bzw. des zweiten Bereichs 3". Die genannte lichte Weite des dritten Bereichs 3³ ist dabei ebenfalls kleiner als der Außendurchmesser sowohl des Bords 1b als auch des Bundes 2b.

An seinem in Figur 3a rechts dargestellten Ende ist das Verbindungsteil/Halteteil 3 durchgängig geschlossen ausgebildet und weist zu diesem Zweck eine 180°-Umbiegung des genannten Profilstrang auf. An seinem anderen, in Figur 3a links dargestellten Ende ist das Verbiridungsteil/Halteteil 3 mit einer Trennstelle 3x versehen, das heißt offen ausgebildet, weist jedoch ein Verschließelement 3y auf, beispielsweise nach Art eines Stifts oder einer Schraube, wodurch sich das Verbindungsteill/Halteteil losbar und definiert verschließen lässt.

Die Funktionsweise des in den Figuren 3a, 3b dargestellte Verbindungs-/Halteteils 3 ist wie folgt:
Bei geöffneter Trennstelle 3x bzw. geöffnetem oder gelockerte Verschließelement 3y wird das Wellrohr 1 mit seinem Bund 1b in den ersten Bereich 3' des Verbindungsteils/Halteeils 3 eingeführt und ist dorf - zumindest nach teilweisem Verschließen der Trennstelle mittels des Verschließelements 3y verliersicher zwischen den freien Profilschenkeln 3u, 3t gehalten. Der lichte Innendurchmesser in dem ersten Bereich 3' ist -wie bereits ausgeführt- groß genug, um das Anschlussrohrteil 2 mit seinem Bund 2b in axialer Richtung Z an dem Bord 1b in Anlage zu bringen, wobei das Anschiussrohrteil 2 mit seinem Bund 2b zwischen den freien Schenkeln 3u, 3t des Profilstrangs hindurchtreten kann. Anschließend wird die gesamte Anordnung innerhalb des Verbindungteils/Halteteils 3 gemäß Figur 3a in Richtung des Pfeils R nach rechts bzw das Teil 3 selbst nach links verschoben. Dabei wird der relativ enge dritte Bereich 3³ passiert, was dadurch ermöglicht ist, dass das Verbindungsteil/Halteteil 3 quer zur Richtung R eine gewisse Elastizität aufweist. Dies ergibt sich in erster Linie dadurch, dass das Verschließelenient 3y das Verbindungsteil/Halteteil 3 an der Trennstelle 3x nicht derartig eng verschließt, dass die sich einander gegenüberliegenden freien Schenkel 3u, 3t aneinander anliegen, sondern dass ein gewisser Freiraum 3z verbleibt, so dass das Verbindungsteil/Halteteil 3 eine gewisse Flexibilität behält. Sobald sich die Anordnung aus Wellrohr 1 und Anschlussrohrteil 2 innerhalb des zweiten Bereichs 3" befindet, kann das Verschließelement 3y grundsätzlich noch fester angezogen werden, so dass die Anordnung aus Wellrohr 1 und Anschlussrohrteil 2 in dem zweiten Bereich 3" des Verbindungsteils/Halteteils 3 sicher gehalten ist,

## Patentansprüche

1. Verbindung zwischen einem Wellrohr (1) und einem Anschlussrohrteil (2), insbesondere für Solarkollektoren, wobei das Anschlussrohrteil in einem Abstand (A1) von seinen freien Ende (2a) eine sich radial erstreckende erste Anschlagstruktur (2b), vorzugsweise einen umlaufenden Bund, mit einer ersten Dicke (D1) aufweist, und wobei das Wellrohr eine sich radial erstreckende zweite Anschlagstruktur (1b), vorzugsweise einen endständigen Bord, mit einer zweiten Dicke (D2) aufweist, mit einer Verbindungsteil (3), welches zumindest eine erste Flaltestruktur (3a) und eine zweite Haltestruktur (3b) aufweist, welches in axialer Richtung um ein Maß (M) voneinander beabstandet sind, welches Maß im Wesentlichen der Summe aus der ersten Dicke und der zweiten Dicke entspricht, wobei das Verbindungsteil (3) mit der ersten Haltestruktur (3a) verliersicher an dem Wellrohr (1) angeordnet oder anordenbar ist, so dass das Verbindungsteil (3) mit seiner zweiten Haltestruktur (3b) gegenüber der Anschlagstruktur (1b) des Wellrohrs hervorsteht, wobei zumindest die zweite Haltestruktur (3b) an wenigstens ihrem von der Anschlagstruktur (1 b) des Wellrohrs (1) abgewandten Ende (3b') derart ausgebildet ist, dass das Anschlussrohrteil (2) mit der ersten Anschlagstruktur (2b) durch sie hindurch axial mit dem Wellrohr (1) zusammenführbar ist, wodurch die erste Anschlagstruktur (2b) und die zweite Anschlagstruktur (1b) gemeinsam zwischen der ersten Haltestruktur (3a) und der zweiten Haltestruktur (3b) aneinander festgelegt sind.

2. Verbindung nach Anspruch 1, **dadurch gekennzeichnet, dass** das Verbindungsteil (3) wenigstens eine dritte Haltestruktur (3g) aufweist, mit der das Verbindungsteil zur verliersicheren Anordnung an dem Wellrohr (1) zwischen zwei Wellenberge des Wellrohre eingreift.

3. Verbindung nach Anspruch 1 oder 2, **dadurch gekennzeichnet, dass** das Verbindungsteil (3) in der Umfangsrichtung geschlossen oder schließbar und vorzugsweise zerstörungsfrei wieder öffenbar ausgebildet ist.

4. Verbindung nach mindestens einem der Ansprüche 1 bis 3, **dadurch gekennzeichnet, dass** das Verbindungsteil (3) nach Art einer Schelle ausgebildet ist, welche an einer Stelle ihres Umfangs eine Trennstelle (3x) aufweist, wobei vorzugsweise an der Trennstelle beiderseits der Trennstelle komplementäre Raststrukturen (3m, 3n) angeordnet sind, mittels derer sich das Verbindungsteil zum Verbinden vom Anschlussrohrtell (2) und Wellrohr (1) reversibel in Umfangsrichtung schließen lässt.

5. Verbindung nach Anspruch 4, **dadurch gekennzeichnet, dass** die Raststrukturen einerseits wenigstens eine erste Hakenstruktur (3m) und andererseits wenigstens einen Durchbruch oder eine zweite Hakenstruktur (3n) umfassen.

6. Verbindung nach Anspruch 4 oder 5, **dadurch gekennzeichnet, dass** die genannten Haltestrukturen (3a, 3b, 3g), vorzugsweise die genannten ersten bis dritten Haltestrukturen, mittels Durchbrüchen (3p, 3s) eines Schellenkörpers gebildet sind.

7. Verbindung nach mindestens einem der Ansprüche 1 bis 3, **dadurch gekennzeichnet, dass** das Verbindungsteil (3) nach Art eines Ringteils ausgebildet ist, welches Ringteils vorzugsweise in Umfangsrichtung an einer Trennstelle (3j, 3x) reversibel trennbar ist.

8. Verbindung nach Anspruch 7, **dadurch gekennzeichnet, dass** die erste Haltestruktur (3a) wenigstens eine aus dem Material des Ringteil-Körpers gebildete erste Zunge (3e) umfasst, vorzugsweise mehrere über den Umfang verteilte erste Zungen, welche radial nach innen in den Bereich zwischen zwei Wellenbergen des Wellrohrs (1) eingreift, vorzugsweise in den Bereich hinter der Anschlagstruktur (1b) des Wellrohre, wobei sich die erste Zunge (3e) mit ihrem freien Ende (3f) höchst vorzugsweise in Richtung der Anschlagstruktur (1b) des Wellrohrs erstreckt.

9. Verbindung nach Anspruch 7 oder 8. **dadurch gekennzeichnet, dass** die zweite Haltestruktur (3b) wenigstens eine aus dem Material des Ringteil-Körpers gebildete zweite Zunge (3c) umfasst, vorzugsweise mehrere über den Umfang verteilte zweite Zungen, welche radial nach innen in den Bereich hinter der Anschlagstruktur (1b) des Weltrohrs (1) eingreift, wobei sich die zweite Zunge (3c) mit ihrem freien Ende (3d) vorzugsweise in Richtung der Anschlagstruktur (1 b) des Wellrohrs (1) und höchst vorzugsweise in Richtung des freien Endes (3f) der ersten Zunge (3e) erstreckt, wobei der lichte axiale Abstand (M) zwischen dem freien Ende (3f) der ersten Zunge und dem freien Ende (3d) der zweiten Zunge im Wesentlichen der Summe aus der ersten Dicke (D2) und der zweiten Dicke (D1) entspricht.

10. Verbindung nach mindestens einem der Ansprüche 7 bis 9 und nach Anspruch 2, **dadurch gekennzeichnet, dass** die dritte Haltestruktur (3g) wenigstens eine aus dem Material des Ringteil-Körpers gebildete dritte Zunge (3h) umfasst, vorzugsweise mehrere über den Umfang verteilte dritte Zungen, welche radial nach innen in den Bereich zwischen zwei Wellenbergen des Wellrohrs (1) eingrelft, wobei sich die dritte Zunge (3h) mit ihrem freien Ende (3i) vorzugsweise von dem Verbindungsende des Wellrohrs (1) weg erstreckt

11. Verbindung nach mindestens einem der Ansprüche 1 bis 3. **dadurch gekennzeichnet, dass** das Verbindungsteil (3) nach Art eines vorzugsweise geschlossenen Halteteils ausgebildet ist, welches Halteteil aufweist:
- wenigstens einen ersten Bereich (3') mit relativ zu einem Außendurchmesser der ersten Anschlagstruktur (2b) und/oder der zweiten Anschlagstruktur (1b) größerem ersten Innendurchmesser oder größerer ersten lichten Weite;
- wenigstens einen zweiten Bereich (3") mit relativ zu dem Außendurchmesser der ersten Anschlagstruktur (2b) und/oder der zweiten Anschlagstruktur (1b) kleinerem oder gleich großen zweiten Innendurchmesser oder kleinerer zweiten lichten Weite;
- wenigstens einen dritten Bereich (3³) mit gegenüber dem ersten Bereich (3') und dem zweiten Bereich (3") kleinerem dritten Innendurchmesser oder kleinerer dritten lichten Weite, welcher dritte Bereich zwischen dem ersten Bereich und dem zweiten Bereich angeordnet ist.

12. Verbindung nach mindestens einem der Ansprüche 1 bis 11, **dadurch gekennzeichnet, dass** das Anschlussrohrteil (2) ein Kupferrohr ist, vorzugsweise mit gegenüber dem Wellrohr (1) relativ großer Toleranz.

13. Verbindung nach mindestens einem der Ansprüche 1 bis 12, **dadurch geKennzeichnet, dass** das Wellrohr (1) endständig in wenigstens einer, vorzugsweise in wenigstens zwei nach innen offenen Weile/n (1c) jeweils einen O-Ring (4) als Dichtung aufweist.

14. Verfahren zum Verbinden eines Weillrohrs (1) mit einem Anschlussrohrteil (2), insbesondere dem Anschlussrohrteil eines Solarkollektors, welches Anschlussrohrteil in einem Abstand (A1) von seinen freien Ende eine sich radial erstreckende erste Anschlagstruktur (2b), vorzugsweise einen umlaufenden Bund, mit einer ersten Dicke (D1) aufweist, und welches Wellrohr eine sich radial erstreckende zweite Anschlagstruktur (1b), vorzugsweise einen endständigen Bord, mit einer zweiten Dicke (D2) aufweist, unter Verwendung eines Verbindungsteils (3), vorzugsweise gemäß einem der Ansprüche 1 bis 13, welches zumindest eine erste (3a) und eine zweite Haltestruktur (3b) aufweist, welche in axialer Richtung (Z) um ein Maß (M) voneinander beabstandet sind, welches Maß im Wesentlichen der Summe aus der ersten Dicke und der zweiten Dicke entspricht, wobei das Verbindungsteil mit der ersten Haltestruktur verliersicher an dem Wellrohr angeordnet oder anordenbar ist, so dass das Verbindungsteil mit seiner zweiten Haltestruktur gegenüber der Anschtagstructur des Wellrohrs hervorsteht, wobei das Anschlussrohrteil durch die zweite Hattestruktur hindurch axial mit dem Wellrohr zusammengerührt wird, bis die erste Anschlagstruktur und die zweite Anschlagstruktur gemeinsam zwischen der ersten Haltestruktur und der zweiten Haltestruktur in axialer Richtung aneinander festgelegt sind.

15. Verfahren nach Anspruch 14, **dadurch gekennzeichnet, dass** zum Festlegen von erster Arischlagstruktur (2b) und zweiter Anschlagstruktur (1b) eine Verschiebung (R) des Verbindungsteils (3) quer zur axialen Richtung erfolgt, insbesondere bei Verwendung des Verbindungsteils gemäß Anspruch 11.
